# EUROPEAN PATENT SPECIFICATION

(11) **EP 3 165 088 B1**
(45) Date of publication and mention of the grant of the patent: **05.02.2020**
(21) Application number: 16195058.9
(22) Date of filing: 21.10.2016
(51) Int. Cl.: A01M 7/00

(54) **AGRICULTURAL TRAILED CROP SPRAYER**
GEZOGENE LANDWIRTSCHAFTLICHE PFLANZENSPRITZE
PULVÉRISATEUR AGRICOLE DE CULTURES TRAÎNÉ

(30) Priority: 05.11.2015 GB 201519539
(43) Date of publication of application: 10.05.2017
(73) Proprietor: AGCO International GmbH, 8212 Neuhausen am Rheinfall (CH)
(72) Inventor: KEMPERMAN, Bram, 5971 NG Grubbenvorst (NL)
(74) Representative: AGCO Intellectual Property Department

(56) References cited:
- EP-A2- 1 958 506
- WO-A1-02/18059
- US-A- 4 723 709
- US-B1- 7 585 000

## Description

### FIELD OF INVENTION

The invention relates to agricultural trailed crop sprayers that comprise a wheeled chassis with a towing hitch for attachment to an agricultural tractor. In particular the invention relates to rinse tanks provided on such sprayers for carrying clean water for rinsing a chemical tank after use.

### BACKGROUND OF INVENTION

Trailed crop sprayers are commonplace in the agricultural field. Such sprayers are used by farmers to apply crop protection products to crop fields such as pesticides and chemical fertilizers. A tractor is typically employed to tow the sprayer across a crop field wherein a deployable spray boom fitted with nozzles applies chemical-laden liquid to the crop.

A wheeled chassis supports a chemical tank with a capacity that typically ranges from 2000 to 12,000 litres. A fluid delivery network selectively connects the chemical tank to the nozzles so that the fluid is pumped to the nozzles during operation.

To avoid residue chemicals and contamination after a spray operation a rinse tank is often provided which carries clean water for rinsing the chemical tank. A pump and the fluid delivery network are configured to selectively connect the rinse tank to one or more nozzles in the chemical tank to facilitate a rinsing process. Examples of such arrangements are disclosed in US-7,585,000, US-4,938,242 and EP-1,029,452.

As the capacity and boom size of trailed sprayers are scaled up to meet customer demands, sprayer manufacturers make efforts to keep the centre of mass of the machine below a level that ensures sufficient stability for working on side banks for example. The scope to widen the wheelbase is very limited due to requirements to fit existing tramline systems and meet highway width legislation. Moreover, the distribution of weight between the drawbar and the wheels must be sufficiently balanced to avoid overloading of the axles and to ensure longitudinal stability.

The increasing size of booms in particular presents weight distribution challenges especially when deployed in the field. When folded for transport a portion of the boom weight resides in front of the sprayer wheels. However, when deployed, the entire boom weight often resides behind the sprayer wheels thus moving the centre of mass rearwardly and transferring weight from the drawbar onto the sprayer wheels. This has the undesirable effects of reduced stability and reduced traction for the towing tractor.

When in the field it is desirable for there to be sufficient weight on the drawbar to provide sufficient traction. However, this is not so desirable when in transport on the road because a more balanced setup is preferred.

### SUMMARY OF INVENTION

In accordance with a first aspect of the invention there is provided an agricultural trailed crop sprayer comprising a wheeled chassis with towing hitch, a chemical tank, front and rear rinse tanks, an applicator boom, and a fluid delivery network, the front rinse tank being disposed forwardly of the rear rinse tank, wherein the fluid delivery network is configured to convey fluid from the front and rear rinse tanks into the chemical tank during a rinse process, characterised in that the fluid delivery network is also configured to transfer rinse fluid from one of said rinse tanks to the other of said rinse tanks.

The fluid delivery network may be configured to transfer rinse fluid from one of said rinse tanks to the other of said rinse tanks in response to a weight transfer command.

In one embodiment fluid is extracted from the rear rinse tank before the fluid is extracted from the front rinse tank during a rinse process. In this case, the rear rinse tank may be substantially drained, at least half of the volume for example, before a substantial volume is extracted from the front rinse tank.

By providing two rinse tanks, one disposed forward of the other, the weight of the rinse fluid can be spread or distributed more favourably on the chassis and thereby improving stability and/or traction. Moreover, by emptying one tank before the other, the weight of the remaining fluid can be maintained in a favourable position to maintain a desirable weight distribution during rinsing.

The crop sprayer preferably further comprises at least one pair of wheels supported opposite one another by the chassis and defining one or more wheel axes. The rear rinse tank has a centre of gravity when full that is preferably disposed behind the wheel axis. The front rinse tank has a centre of gravity when full that is preferably disposed forward of the wheel axis. Advantageously, the distribution of the rinse fluid can therefore be adapted or controlled to balance or transfer weight between the wheels of the sprayer and the wheels of a towing tractor (via the towing hitch).

In one embodiment, the rear rinse tank is emptied before the front rinse tank so that as much weight as possible of any remaining rinse fluid is carried by the tractor to maintain traction and stability. This is especially beneficial whilst the boom is deployed behind the sprayer wheel axis.

The front rinse tank has a centre of gravity when full that is preferably disposed forward of the chemical tank.

The rear rinse tank has a fill limit that is preferably disposed above a fill limit of the front rinse tank. Advantageously, gravity can be exploited to ensure that the rear rinse tank starts to empty before the front rinse tank. Preferably further still, a base of the rear rinse tank is disposed above the front rinse tank fill limit. Gravity can then be exploited to ensure that the rear rinse tank is emptied before the front rinse tank starts to empty.

In a passive system, the fluid delivery network may comprise a transfer pipe connecting a first opening provided in a lower portion of the rear rinse tank to a second opening in an upper portion of the front rinse tank. Rinse fluid may be extracted from both tanks via an opening near the bottom of the front rinse tank, whereby gravity transfers fluid between the tanks via the transfer pipe.

Alternatively, the fluid delivery network may comprise a pump, wherein the fluid delivery network is configured to pump fluid from one of the rinse tanks to the other.

The fluid delivery network may be configured to automatically pump fluid from the rear rinse tank to the front rinse tank in response to the applicator boom being deployed. Advantageously, if there is sufficient space in the rinse tanks, the weight of the rinse fluid is exploited to maintain a desired weight balance between the sprayer wheels and the tractor wheels. By moving the rinse fluid forwardly on the chassis in response to deployment of the boom, the rearward weight transfer of the boom is at least in part counteracted by the forward weight transfer of the rinse fluid.

Conversely, the fluid delivery network may be configured to automatically pump fluid from the front rinse tank to the rear rinse tank in response to the applicator boom being folded for transport. By moving the rinse fluid rearwardly on the chassis in response to folding of the boom, the forward weight transfer of the boom is at least in part counteracted by the rearward weight transfer of the rinse fluid.

In accordance with a second aspect of the invention there is provided a method of rinsing a chemical tank of an agricultural trailed crop sprayer which comprises a wheeled chassis with towing hitch, a chemical tank, front and rear rinse tanks, an applicator boom, and a fluid delivery network, the method comprising the steps of conveying rinse fluid from one of said rinse tanks to the other of said rinse tanks.

### BRIEF DESCRIPTION OF DRAWINGS

Further advantages will become apparent from reading the following description of specific embodiments of the invention with reference to the appended drawings in which:-
Figure 1 is a schematic plan view of a tractor and an agricultural trailed crop sprayer showing the applicator boom in a deployed position;
Figure 2 is a schematic side elevation view of an agricultural trailed crop sprayer in accordance with a first embodiment of the invention;

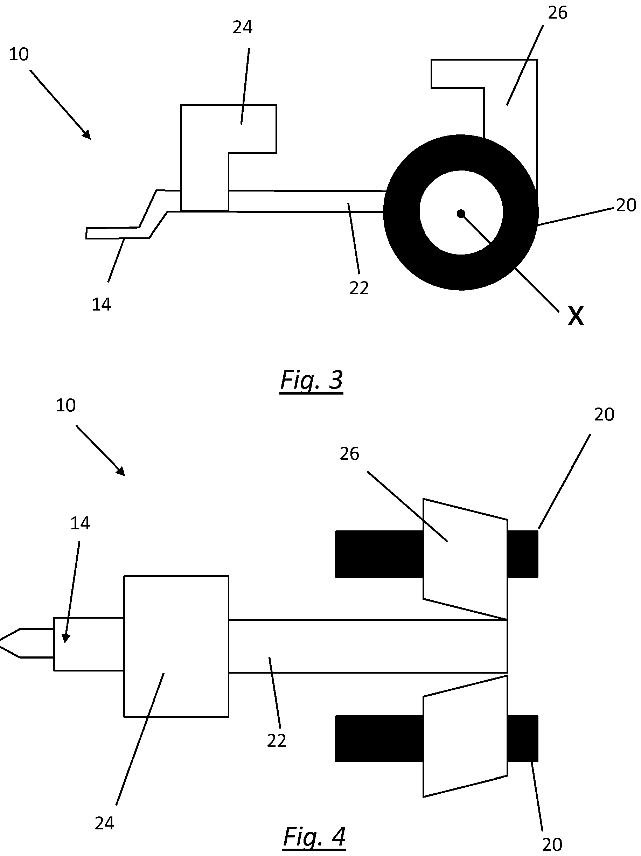

Figure 3 is a side elevation view of the crop sprayer of Figure 2 shown in more detail but with the chemical tank omitted for clarity;
Figure 4 is a plan view of the crop sprayer of Figure 2 shown with the chemical tank omitted;
Figure 5 is a perspective view of the crop sprayer of Figure 2 showing the boom in a folded 'transport' position;
Figure 6 is a diagrammatic view showing part of a fluid delivery network comprised in the crop sprayer of Figure 2;
Figure 7 is a diagrammatic view showing part of a fluid delivery network in accordance with a second embodiment of the invention; and,
Figure 8 is a flow chart representing a method of rinsing a chemical tank in accordance with an aspect of the invention.

### DESCRIPTION OF SPECIFIC EMBODIMENTS

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

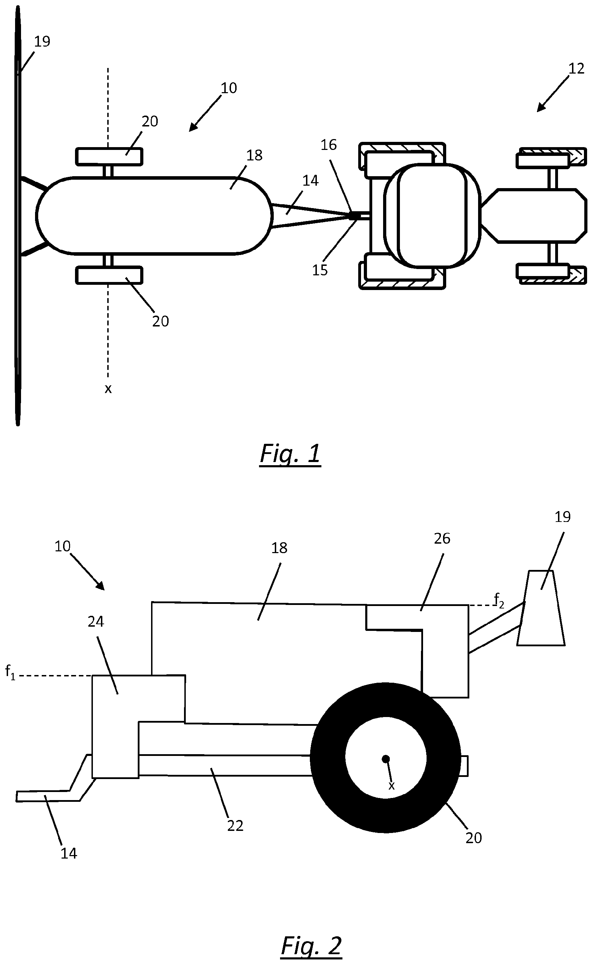

With reference to Figure 1, a trailed agricultural sprayer 10 is shown hitched to a tractor 12. The sprayer 10 comprises a frame which includes a tongue 14 connected to a tractor drawbar 15 by a pin 16 which provides a connection that can pivot about the vertical axis of the pin. The frame of the sprayer 10 supports a chemical storage tank 18 and a foldable spray boom 19 the width of which defines a working width.

The sprayer 10 comprises a pair of wheels 20 supported opposite one another by the chassis 22 wherein the position of the wheels 20 defines a transverse wheel axis x. In some embodiments the wheels 20 are steerable but this is not critical to the invention.

Turning to Figure 2, the sprayer 10 also comprises a front rinse tank 24 and a rear rinse tank 26 disposed rearward of the front rinse tank 24. The rinse tanks 24, 26 are connected, or plumbed, to a fluid distribution network (not shown) which is also plumbed to the chemical tank 18 and nozzles disposed in a spaced relationship along the boom.

The rinse tanks 24, 26 serve to hold rinse fluid, typically clean water, which is used during a rinse process at the end of a spray operation to clean the chemical tank 18 so as to remove residue chemical and avoid contamination of future chemical applications. The fluid delivery network is configured to convey rinse fluid from the rinse tanks 24, 26 to cleaning jets, for example, located in the chemical tank 18 during a rinse process.

The front rinse tank 24 has a centre of gravity when full, or substantially full, that is disposed forward of the wheel axis x. The rear rinse tank 26 has a centre of gravity when full that is disposed behind the wheel axis. Generally speaking, the exterior profile of the front rinse tank 24 is preferably (as shown) disposed forwardly and clear of the exterior profile of the rear rinse tank 26.

The centre of gravity of the front rinse tank when full is disposed forward of the 'full' centre of gravity of the chemical tank 18 and preferably forward of the exterior profile of the chemical tank 18.

The rinse tanks 24, 26 have respective fill limits f₁, f₂, that are defined by the interior profile of the tanks and the plumbing connected thereto. The fill limit f₁ of the front rinse tank 24 is disposed below the fill limit f₂ of the rear rinse tank 26.

In a not illustrated embodiment a base of the rear rinse tank is disposed above the front rinse tank fill limit. With the provision of a simple transfer pipe connected between the two rinse tanks, gravity can then be exploited to drain the rinse tanks via a single outlet in the front rinse tank thus keeping the weight of the rinse fluid as far forward as possible.

The provision of two rinse tanks offset longitudinally from one another allows the weight of the rinse fluid contained therein to be distributed on the chassis 22 as desired and preferably according to the operation mode. In a preferred embodiment the fluid delivery network is configured to extract rinse fluid from the rear rinse tank before rinse fluid is extracted from the front rinse tank to avoid a rearward shift of the centre of mass of the load carried on the sprayer wheels 20. By emptying, or part draining, the rear rinse tank 26 before the front rinse tank 24 weight behind the wheel axis x is reduced thus 'tipping' the balance of weight towards the towing hitch 14 and the tractor wheels.

As described above, the fluid transfer means may draw fluid from both tanks via a single outlet in the bottom of the front tank, together with provision of a transfer pipe. However, in a preferred arrangement, the fluid delivery network comprises a pump, wherein the fluid delivery network is configured to pump fluid from one of the rinse tanks to the other.

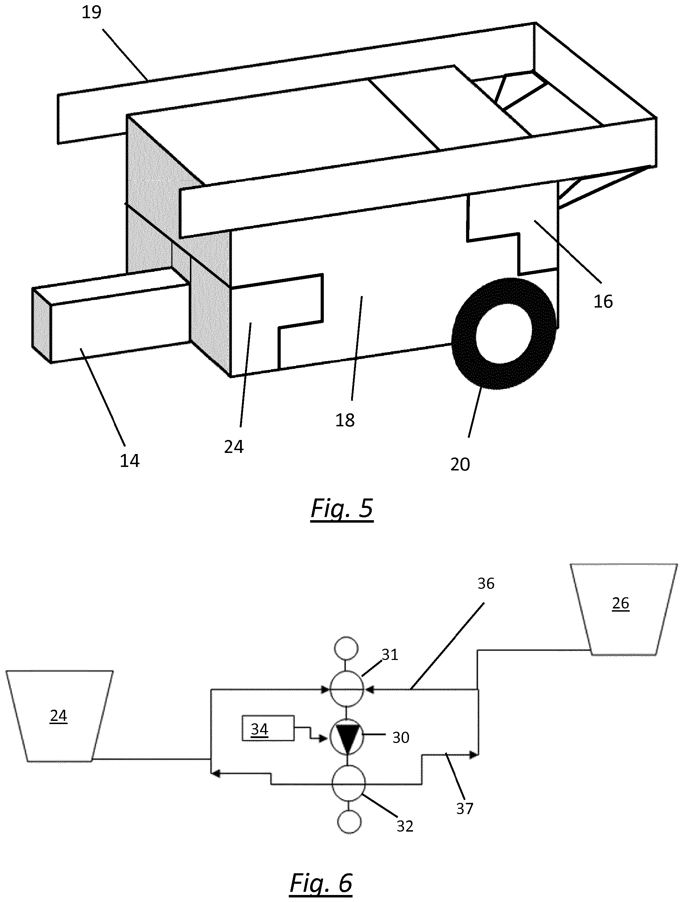

Figure 6 shows an example fluid delivery network 100 comprising a pump 30 plumbed between two electrically-actuated three-port valves 31, 32. A first valve 31 is positioned on the suction side of the pump 30 whereas a second valve 32 is positioned on the pressure side of the pump 30. A controller 34 serves to control the pump 30 and valves 31, 32. The front and rear rinse tanks 24, 26 are plumbed to one another via two parallel pipes 36, 37 each of which comprises a respective one of the valves 31, 32.

By controlling the pump 30 and the valves 31, 32, rinse fluid can be injected into or draw from the two rinse tanks, and also transferred in either direction between the rinse tanks 24, 26.

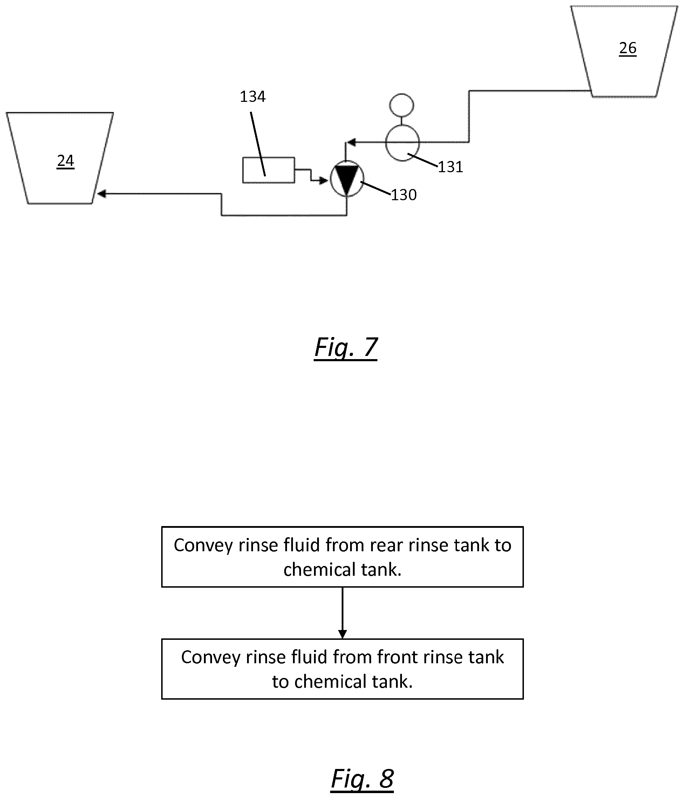

Figure 7 shows an alternative arrangement to that shown in Figure 6. The network 200 of Figure 7 employs a reversible pump 130 controlled by a controller 134. In this arrangement, only one valve 131 and one plumbing line is required.

By transferring rinse fluid from one rinse tank to the other, the centre of gravity of the sprayer 10 can be adapted. This shifting of the centre of gravity can take place during operation.

In one embodiment the desired fluid level in both rinse tanks 24, 26 is calculated with an algorithm based upon the chemical tank volume, the drawbar or axle load, the mode of operation (field mode or road mode) and the boom position.

In a field mode of operation more weight may be desirable on the drawbar than when in a road mode for example. Therefore, the fluid delivery network may be controlled (automatically or manually) so as to transfer rinse fluid from the rear tank 26 to the front tank 24 when the field mode is detected or activated. Conversely, the fluid delivery network may be controlled so as to transfer rinse fluid from the front tank 24 to the rear tank 26 when the road mode is detected or activated.

As will be apparent from Figure 5, the centre of mass of the boom 19 shifts forward when placed into the transport (folded) position as shown. In another embodiment, the fluid delivery network is controlled automatically so as to transfer rinse fluid from the rear tank 26 to the front tank 24 when the deployment of the boom 19 is detected. Conversely, the fluid delivery network may be controlled automatically so as to transfer rinse fluid from the front tank 24 to the rear tank 26 when folding of the boom 19 for transport is detected.

In summary, there is provided an agricultural trailed crop sprayer that comprises a wheeled chassis with a towing hitch. The chassis supports a chemical tank, front and rear rinse tanks, an applicator boom, and a fluid delivery network. The front rinse tank is disposed forwardly of the rear rinse tank. The fluid delivery network is configured to convey fluid from the front and rear rinse tanks into the chemical tank during a rinse process. Fluid is transferable between the rinse tanks in response to operating demands or weight transfer commands.

## Claims

1. An agricultural trailed crop sprayer (10) comprising a wheeled chassis (22) with towing hitch (14), a chemical tank (18), front and rear rinse tanks (24,26), an applicator boom (19), and a fluid delivery network (100), the front rinse tank (24) being disposed forwardly of the rear rinse tank (26), wherein the fluid delivery network (100) is configured to convey fluid from the front and rear rinse tanks (24,26) into the chemical tank (18) during a rinse process, **characterised in that** the fluid delivery network is also configured to transfer rinse fluid from one of said rinse tanks to the other of said rinse tanks.

2. A crop sprayer according to Claim 1, wherein the fluid delivery network is configured to transfer rinse fluid from one of said rinse tanks to the other of said rinse tanks in response to a weight transfer command.

3. A crop sprayer according to Claim 1 or 2, wherein fluid is extracted from the rear rinse tank (26) before the fluid is extracted from the front rinse tank (24) during a rinse process.

4. A crop sprayer according to any preceding claim, further comprising a pair of wheels (20) supported opposite one another by the chassis (22) and defining a wheel axis (x), wherein the rear rinse tank (26) has a centre of gravity when full that is disposed behind the wheel axis (x), and wherein the front rinse tank (24) has a centre of gravity when full that is disposed forward of the wheel axis (x).

5. A crop sprayer according to any preceding claim, wherein the front rinse tank (24) has a centre of gravity when full that is disposed forward of the chemical tank (18).

6. A crop sprayer according to any preceding claim, wherein the rear rinse tank (26) has a fill limit (f₂) that is disposed above a fill limit of the front rinse tank (f₁).

7. A crop sprayer according to Claim 6, wherein a base of the rear rinse tank (26) is disposed above the front rinse tank fill limit (f₁).

8. A crop sprayer according to Claim 7, wherein the fluid delivery network (100;200) comprises a pipe connecting a first opening provided in a lower portion of the rear rinse tank to a second opening in an upper portion of the front rinse tank.

9. A crop sprayer according to any preceding claim, wherein the fluid delivery network comprises a pump (30; 130), and wherein the fluid delivery network is configured to pump fluid from one of the rinse tanks to the other.

10. A crop sprayer according to Claim 9, wherein the fluid delivery network is configured to automatically pump fluid from the rear rinse tank to the front rinse tank in response to the applicator boom being deployed.

11. A crop sprayer according to Claim 9 or 10, wherein the fluid delivery network is configured to automatically pump fluid from the front rinse tank to the rear rinse tank in response to the applicator boom being folded for transport.

12. A method of rinsing a chemical tank (18) of an agricultural trailed crop sprayer (10) which comprises a wheeled chassis (22) with towing hitch (14), a chemical tank (18), front and rear rinse tanks (24,26), an applicator boom (19), and a fluid delivery network (100;200), the method comprising the steps of conveying rinse fluid from one of said rinse tanks to the other of said rinse tanks.

13. A method according to Claim 12, further comprising the step of conveying rinse fluid from the rear rinse tank (26) to the chemical tank (18) before conveying rinse fluid from the front rinse tank (24) to the chemical tank (18) during a rinse process.

## Patentansprüche

1. Landwirtschaftliche nachgezogene Pflanzenspritze (10), mit einem fahrbaren Chassis (22) mit einer Anhängekupplung (14), einem chemischen Tank (18), einem vorderen Spültank (24) und einem hinteren Spültank (26), einem Aufbringungsausleger (19) und einem Fluidbereitstellungsnetzwerk (100), wobei der vordere Spültank (24) vor dem hinteren Spültank (46) angeordnet ist, wobei das Fluidbereitstellungsnetzwerk (100) konfiguriert ist, um ein Fluid während eines Spülvorgangs von dem vorderen Spültank (24) und dem hinteren Spültank (26) in den chemischen Tank (18) zu fördern, **dadurch gekennzeichnet, dass**
das Fluidbereitstellungsnetzwerk weiterhin konfiguriert ist, um ein Spülfluid von einem der Spültanks zu dem anderen der Spültanks zu überführen.

2. Pflanzenspritze nach Anspruch 1, wobei das Fluidbereitstellungsnetzwerk konfiguriert ist, um ein Spülfluid in Abhängigkeit von einem Gewichtsverlagerungsbefehl von einem der Spültanks zu dem anderen der Spültanks zu überführen.

3. Pflanzenspritze Anspruch 1 oder 2, wobei das Fluid während eines Spülvorgangs aus dem hinteren Spültank (26) entnommen wird, bevor das Fluid aus dem vorderen Spültank (24) entnommen wird.

4. Pflanzenspritze nach mindestens einem der vorhergehenden Ansprüche, weiterhin mit einem Paar von Rädern (20), die gegenüberliegend an dem Chassis (2) gelagert sind und eine Radachse (x) definieren, wobei der volle hintere Spültank (26) einen Schwerpunkt besitzt, der hinter der Radachse (x) liegt, und wobei der volle vordere Spültank (24) einen Schwerpunkt besitzt, der vor der Radachse (x) liegt.

5. Pflanzenspritze nach mindestens einem der vorhergehenden Ansprüche, wobei der volle vordere Spültank (24) einen Schwerpunkt besitzt, der vor dem chemischen Tank (18) liegt.

6. Pflanzenspritze nach mindestens einem der vorhergehenden Ansprüche, wobei der hintere Spültank (26) eine Befüllungsgrenze (f₂) besitzt, die oberhalb einer Befüllungsgrenze (f₁) des vorderen Spültanks (24) liegt.

7. Pflanzenspritze nach Anspruch 6, wobei eine Basis des hinteren Spültanks (26) oberhalb der Befüllungsgrenze (f₁) des vorderen Spültanks (24) liegt.

8. Pflanzenspritze nach Anspruch 7, wobei das Fluidbereitstellungsnetzwerk (100; 200) eine Leitung aufweist, die eine erste Öffnung in einem unteren Bereich des hinteren Spültanks mit einer zweiten Öffnung in einem oberen Bereich des vorderen Spültanks verbindet.

9. Pflanzenspritze nach mindestens einem der vorhergehenden Ansprüche, wobei das Fluidbereitstellungsnetzwerk eine Pumpe (30; 130) aufweist und wobei das Fluidbereitstellungsnetzwerk konfiguriert ist, um ein Fluid von einem der Spültanks zu dem anderen der Spültanks zu pumpen.

10. Pflanzenspritze nach Anspruch 9, wobei das Fluidbereitstellungsnetzwerk konfiguriert ist, um ein Fluid in Abhängigkeit von der Benutzung des Aufbringungsauslegers automatisch von dem hinteren Spültank zu dem vorderen Spültank zu pumpen.

11. Pflanzenspritze nach Anspruch 9 oder 10, wobei das Fluidbereitstellungsnetzwerk konfiguriert ist, um ein Fluid in Abhängigkeit von dem Zusammenfalten des Aufbringungsauslegers für den Transport automatisch von dem vorderen Spültank zu dem hinteren Spültank zu pumpen.

12. Verfahren zum Spülen eines chemischen Tanks (18) einer landwirtschaftlichen nachgezogenen Pflanzenspritze (10) mit einem fahrbaren Chassis (22) mit einer Anhängekupplung (14), einem chemischen Tank (18), einem vorderen Spültank (24) und einem hinteren Spültank (26), einem Aufbringungsausleger (19) und einem Fluidbereitstellungsnetzwerk (100; 200), wobei das Verfahren den Schritt des Förderns eines Spülfluids von einem der Spültanks zu dem anderen der Spültanks aufweist.

13. Verfahren nach Anspruch 12, weiterhin mit dem Schritt des Förderns eines Spülfluids während eines Spülvorgangs von dem hinteren Spültank (26) zu dem chemischen Tank (18), bevor ein Spülfluid von dem vorderen Spültank (44) zu dem chemischen Tank (18) gefördert wird.

## Revendications

1. Pulvérisateur de récolte agricole tracté (10) comprenant un châssis roulant (22) avec crochet de remorquage (14), un réservoir de produit chimique (18), des réservoirs de rinçage avant et arrière (24, 26), une perche d'applicateur (19) et un réseau d'alimentation en fluide (100), le réservoir de rinçage avant (24) étant disposé à l'avant du réservoir de rinçage arrière (26), dans lequel le réseau d'alimentation en fluide (100) est configuré de manière à transférer le fluide à partir des réservoirs de rinçage avant et arrière (24, 26) dans le réservoir de produit chimique (18) au cours d'une opération de rinçage, **caractérisé en ce que** le réseau d'alimentation en fluide est aussi configuré de manière à transférer le fluide de rinçage à partir de l'un desdits réservoirs de rinçage vers l'autre desdits réservoirs de rinçage.

2. Pulvérisateur de récolte selon la revendication 1, dans lequel le réseau d'alimentation en fluide est configuré de manière à transférer le fluide de rinçage à partir de l'un desdits réservoirs de rinçage vers l'autre desdits réservoirs de rinçage en réponse à une instruction de transfert de masse.

3. Pulvérisateur de récolte selon la revendication 1 ou 2, dans lequel du fluide est extrait à partir du réservoir de rinçage arrière (26) avant que du fluide soit extrait à partir du réservoir de rinçage avant (24) au cours d'une opération de rinçage.

4. Pulvérisateur de récolte selon l'une quelconque des revendications précédentes, comprenant, en outre, une paire de roues (20) supportées l'une à l'opposé de l'autre par le châssis (22) et définissant un axe de roue (x), dans lequel le réservoir de rinçage arrière (26) présente un centre de gravité lorsqu'il est plein qui est situé derrière l'axe de roue (x), et dans lequel le réservoir de rinçage avant (24) présente un centre de gravité lorsqu'il est plein qui est situé à l'avant de l'axe de roue (x).

5. Pulvérisateur de récolte selon l'une quelconque des revendications précédentes, dans lequel le réservoir de rinçage avant (24) présente un centre de gravité lorsqu'il est plein qui est situé à l'avant du réservoir de produit chimique (18).

6. Pulvérisateur de récolte selon l'une quelconque des revendications précédentes, dans lequel le réservoir de rinçage arrière (26) présente une limite de remplissage (f₂) qui est située au-dessus d'une limite de remplissage du réservoir de rinçage avant (f₁).

7. Pulvérisateur de récolte selon la revendication 6, dans lequel une base du réservoir de rinçage arrière (26) est située au-dessus de la limite de remplissage de réservoir de rinçage avant (f₁).

8. Pulvérisateur de récolte selon la revendication 7, dans lequel le réseau d'alimentation en fluide (100 ; 200) comprend une tuyauterie reliant une première ouverture agencée sur une partie inférieure du réservoir de rinçage arrière à une seconde ouverture sur une partie supérieure du réservoir de rinçage avant.

9. Pulvérisateur de récolte selon l'une quelconque des revendications précédentes, dans lequel le réseau d'alimentation en fluide comprend une pompe (30 ; 130) et dans lequel le réseau d'alimentation en fluide est configuré de manière à pomper le fluide à partir de l'un des réservoirs de rinçage vers l'autre.

10. Pulvérisateur de récolte selon la revendication 9, dans lequel le réseau d'alimentation en fluide est configuré de manière à pomper automatiquement du fluide à partir du réservoir de rinçage arrière vers le réservoir de rinçage avant en réponse au déploiement de la perche d'applicateur.

11. Pulvérisateur de récolte selon la revendication 9 ou 10, dans lequel le réseau d'alimentation en fluide est configuré de manière à pomper automatiquement du fluide à partir du réservoir de rinçage avant vers le réservoir de rinçage arrière en réponse au pliage de la perche d'applicateur pour le transport.

12. Procédé de rinçage d'un réservoir de produit chimique (18) d'un pulvérisateur de récolte agricole tracté (10) qui comprend un châssis roulant (22) avec un crochet de remorquage (14), un réservoir de produit chimique (18), des réservoirs de rinçage avant et arrière (24, 26), une perche d'applicateur (19), et un réseau d'alimentation en fluide (100 ; 200), le procédé comprenant les étapes de transfert de fluide de rinçage à partir de l'un desdits réservoirs de rinçage vers l'autre desdits réservoirs de rinçage.

13. Procédé selon la revendication 12, comprenant, en outre, l'étape de transfert de fluide de rinçage à partir du réservoir de rinçage arrière (26) vers le réservoir de produit chimique (18) avant de transférer du fluide de rinçage à partir du réservoir de rinçage avant (24) vers le réservoir de produit chimique (18) au cours d'une opération de rinçage.
